Europäisches Patentamt

European Patent Office

Office européen des brevets

(11) Veröffentlichungsnummer : **0 102 526**
**B1**

(12) **EUROPÄISCHE PATENTSCHRIFT**

(45) Veröffentlichungstag der Patentschrift :
**15.03.89**

(51) Int. Cl.⁴ : **B 60 J 1/10**

(21) Anmeldenummer : **83107598.1**

(22) Anmeldetag : **02.08.83**

(54) Fahrzeugfenster, insbesondere Seitenfenster von Reisezugwagen.

(30) Priorität : **03.09.82 DE 3232781**

(43) Veröffentlichungstag der Anmeldung :
**14.03.84 Patentblatt 84/11**

(45) Bekanntmachung des Hinweises auf die Patenterteilung : **15.03.89 Patentblatt 89/11**

(84) Benannte Vertragsstaaten :
**AT CH FR GB IT LI**

(56) Entgegenhaltungen :
**DE--A-- 2 260 068**
**DE--A-- 2 841 177**
**DE--B-- 1 252 533**
**US--A-- 4 204 374**

(73) Patentinhaber : **Messerschmitt-Bölkow-Blohm Gesellschaft mit beschränkter Haftung**
**Robert-Koch-Strasse**
**D-8012 Ottobrunn (DE)**

(72) Erfinder : **Riegler, Manfred, Dipl.-Ing.**
**Wiesenstrasse 3**
**D-8011 Brunnthal (DE)**

**Beschreibung**

Die Erfindung betrifft ein Fahrzeugfenster gemäß dem Oberbegriff des Patentanspruchs 1.

Bei einem derartigen gemäß der DE-A-28 41 177 für Omnibusse bevorzugten Fahrzeugfenster ermöglichen die Klebstoffschichten einen mit dem Fensterausschnitt der Fahrzeugwandung bündigen Einbau der Fensterscheibe, was zur Minderung der Wirksamkeit der aerodynamischen Kräfte bedeutsam ist. Hierbei sollen die Klebstoffschichten Schubkräfte zwischen dem Fensterrahmen und der Fensterscheibe übertragen können, um sicherzustellen, daß die Fensterscheibe zugleich die Funktion eines tragenden Bauteils der Fahrzeugwandung erfüllt. Folglich kommt der Sicherheit der Klebverbindung eine beträchtliche Bedeutung zu, wobei es naturgemäß nicht nur auf den Klebstoff, sondern auch auf die Größe der wirksamen Haftfläche ankommt. Diesbezüglich stellt sich durch die Verwendung der Doppel- oder Mehrfachscheibe das Problem einer wirksamen Einbeziehung sämtlicher Teilscheiben des Aufbaus der Fensterscheibe für deren Schubkraftaufnahme, wozu die in der vorgenannten DE-A-2841177 angewendete Einscheibenklebung keine Lösung ist. Das gilt vor allem für die Fenster von klimatisierten Reisezugwagen des Schienenverkehrs, welche bekanntlich aus Gründen der Wärme- und Schallisolierung auf solche Doppel- bzw. Mehrfachfensterscheiben angewiesen sind, deren Teilscheiben zueinander auf Distanz gehalten sind.

Der Erfindung liegt die Aufgabe zugrunde, bei einem Fahrzeugfenster der eingangs genannten Art die Fensterscheibe als tragendes Bauteil der Fahrzeugwandung besser auszunutzen.

Diese Aufgabe ist gemäß dem Kennzeichen des Patentanspruchs 1 gelöst, nämlich durch Vergrößern der wirksamen Haftfläche zwischen dem Fensterrahmen und der Fensterscheibe im Wege einer stufenförmigen Gestaltung wenigstens der beiden Längsseiten der Fensterscheibe mit entsprechender Anpassung des Rahmenprofils derart, daß jede Teilscheibe gesondert über eine Klebstoffschicht fixierbar ist ohne Beeinträchtigung des Profils der Fahrzeugwandung hinsichtlich ihres Luftwiderstandes. Dies wird nachfolgend anhand von Ausführungsbeispielen der Erfindung weiter verdeutlicht, wobei auch auf deren in den Unteransprüchen gekennzeichneten Weiterbildungen eingegangen wird. Die Zeichnungen zeigen dazu nur schematisch in

Fig. 1 einen Querschnitt durch einen Fensterrahmen einer darin eingeklebten Doppelscheibe,

Fig. 2 eine alternative Ausführungsform für einen Fensterrahmen und die Doppelscheibe gemäß Fig. 1,

Fig. 3 einen Schnitt gemäß Schnittlinie III-III der Fig. 2,

Fig. 4 bis 7 Weiterbildungen der Anordnung gemäß Fig. 1.

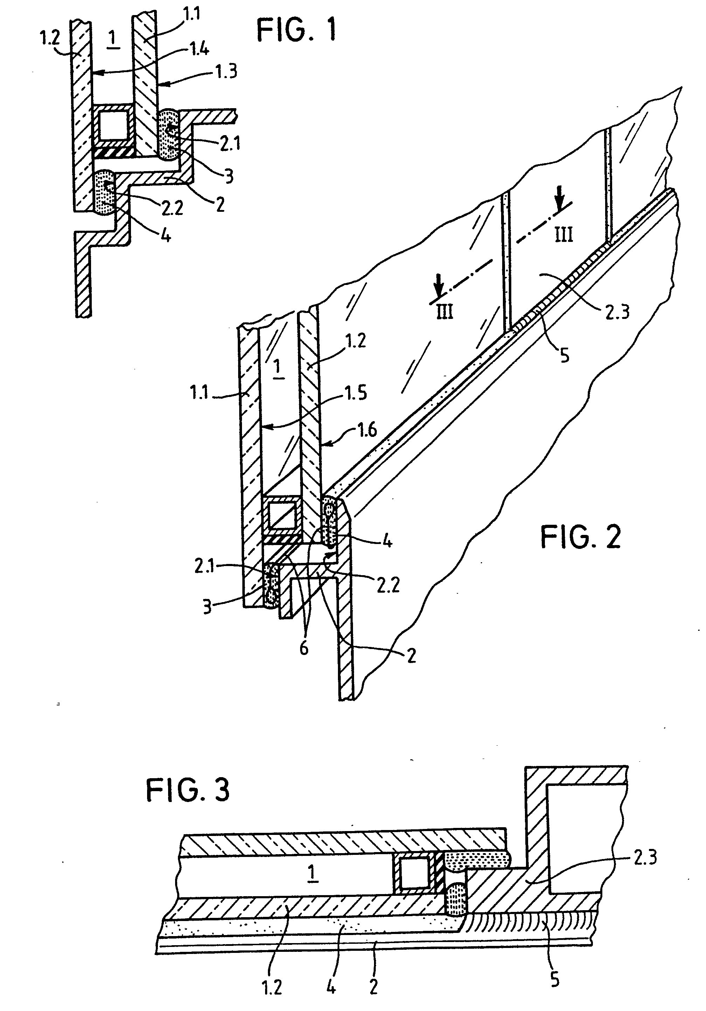

Um die als Doppelscheibe ausgebildete Fensterscheibe 1 des einzelnen Seitenfensters eines Reisezugwagens als tragendes Bauteil der Wagenseitenwand heranziehen zu können, ist jene gemäß Fig. 1 und 2 in einem Fensterrahmen 2 so eingeklebt, daß deren Innen- und Außenscheibe 1.1 bzw. 1.2 jeweils über eine eigene Klebstoffschicht 3 bzw. 4 fixiert ist und somit für sich Schubkräfte aufnehmen und übertragen kann. Hierzu sind einerseits für die Innen- und Außenscheibe 1.1 bzw. 1.2 unterschiedliche Seitenlängen gewählt, wobei wenigstens den beiden längeren Scheibenlängsseiten nach die Außenscheibe 1.2 größer ist als die Innenscheibe 1.1 (Fig. 1) oder die Innenscheibe 1.1 größer ist als die Außenscheibe 1.2 (Fig. 2). Andererseits ist entsprechend für den Fensterrahmen 2 ein stufenförmiges Profil gewählt, welches gemäß Fig. 1 für die Innenflächen 1.3 bzw. 1.4 der Innen- und Außenscheibe 1.1, 1.2 zueinander räumlich versetzte Anschlag- und Klebeflächen 2.1 bzw. 2.2 aufweist. Hierbei kann selbstverständlich die offen dargestellte Fuge zwischen der Außenscheibe 1.2 und dem Fensterrahmen 2 mit einer Dichtmasse, erforderlichenfalls auch ganz mit Klebstoff ausgefüllt werden. Bei der in Fig. 2 dargestellten alternativen Ausführungsform mit größerer Innenscheibe 1.1 weist entsprechend das stufenförmige Profil des Fensterrahmens 2 zueinander räumlich versetzte Anschlagund Klebeflächen 2.1, 2.2 für die Außenflächen 1.5 bzw. 1.6 der Innen- und Außenscheibe 1.1, 1.2 auf. Bei dieser Scheibenanordnung stützt das Rahmenprofil die Fensterscheibe 1 zugleich gegen Sogwirkungen der Luftkräfte. Im übrigen kann hier ohne weiteres auf eine Scheibenrandbeschichtung zum Lichtschutz der Klebstoffschichten 3, 4 (gegen UV-Strahlung) verzichtet werden. Der gegenüber der Seitenwandaußenfläche in Kauf genommene Versatz der Fensterscheibe 1 ist von unwesentlichem aerodynamischen und - akustischen Einfluß, sofern, wie insbesondere Fig. 3 an der auch an den kürzeren Seiten gestuften Fensterscheibe 1 verdeutlicht, der jeweils zwischen zwei Fensterscheiben 1 sitzende Fensterpfosten 2.3 bündig zu den Außenscheiben 1.2 gegenüber dem übrigen Rahmenprofil nach innen versetzt ist, beispielsweise unter Zwischenfügung einer Schweißnaht 5 von der Dicke der äußeren Klebstoffschicht 4. Schließlich ist aus Fig. 2 noch ersichtlich, daß beide Fensterausführungsformen die Möglichkeit bieten, in Hohlräumen im Bereich der Klebstoffschichten 3, 4 zum bedarfsweisen Durchtrennen derselben Reißdrähte 6 anzuordnen, beispielsweise zur Erleichterung des Entfernens von Scheibenresten der beschädigten Fensterscheibe.

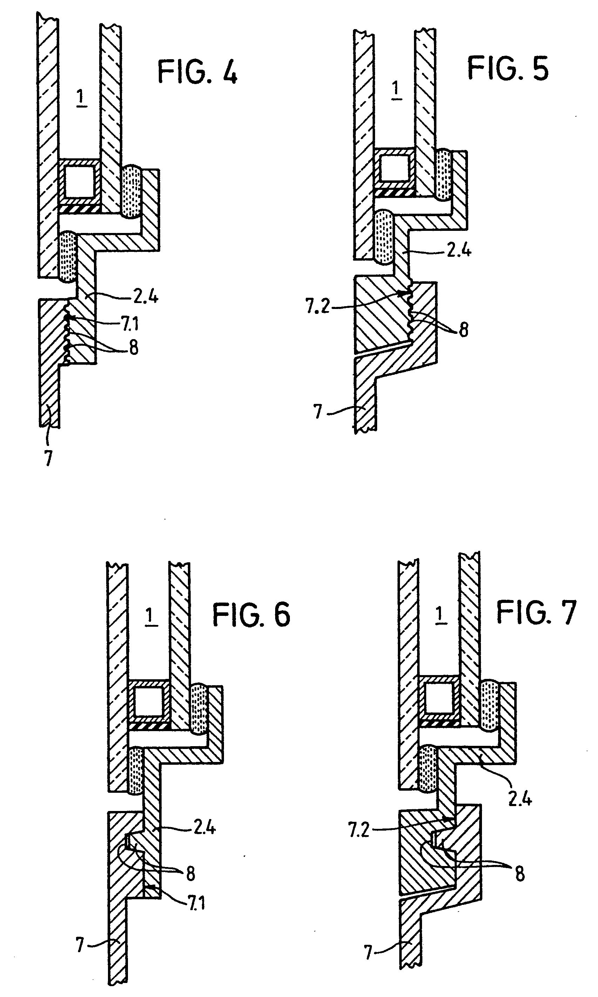

Im übrigen ist es bei Fahrzeugfenstern der vorbeschriebenen Art nicht bindend, daß der Fensterrahmen 2 einstückiger Bestandteil der Wagenseitenwand ist. So kann z. B. abweichend von der Ausführungsform der Fig. 1, wie die Fig. 5 bis 7 zeigen, der Fensterrahmen aus von der Wagenseitenwand 7 lösbaren Profilen 2.4 bestehen. Bei einem Anschluß derselben durch Schraubverbindungen ist dies für Fensterreparaturen von Vorteil. Bei einer solchen Fensteranordnung kommt es unter der Forderung « Fensterscheibe 1 als tragendes Wandungsbauteil » vor allem darauf an, daß für die Schubkraftübertragung auch nach vielfachem Scheibenaustausch noch Formschluß zwischen diesen Rahmenprofilen 2.4 und der Wagenseitenwand 7 besteht. Daher sind die einzelnen Rahmenprofile 2.4 an der zugeordneten Wandungsanschlagfläche 7.1 durch eine Verzahnung 8 gegen Querverschiebung gesichert. Hierzu veranschaulichen die Fig. 4, 5 und 6, 7 jeweils eine Ausführungsmöglichkeit : Bei der Profilgestaltung gemäß Fig. 4, 6, welche im Vergleich zur Ausführungsform der Fig. 1 im Grunde auf einer bloßen Teilung des Seitenwandungsprofils basiert, wird die Fensterscheibe 1 nach dem Anschluß der Rahmenprofile 2.4 an der Wagenseitenwand 7 eingesetzt, so daß man den Ausgleich von Fertigungsungenauigkeiten über die Klebefuge vornehmen wird. Dem gegenüber ist die Profilgestaltung gemäß Fig. 5, 7 mit wandungsseitig gerahmten Rahmenprofilen 2.4 für eine Klebverbindung derselben mit der Fensterscheibe 1 vor der Fenstermontage von Vorteil. Diese Profilgestaltung hat außerdem wegen der außenseitigen Wandungsanschlagflächen 7.2 den Vorteil, daß eine Wageninnenverkleidung von einer Fensterdemontage unbeeinträchtigt bleiben kann.

Wie schon zu der Ausführungsform der Fig. 1 erwähnt ist, können selbstverständlich auch alle in den übrigen Fig. offen dargestellten Fugen mit üblichen Dichtungs- und Abdeckungsmitteln, u. U. auch mit Klebstoff, geschlossen werden. Schließlich ist noch hervorzuheben, daß ein Fahrzeugfenster gemäß der Erfindung auf eine Fensterscheibe aus zwei Teilscheiben nicht beschränkt ist, diese also noch mehr Teilscheiben aufweisen und dann der Fensterrahmen bzw. das Rahmenprofil entsprechend weiter gestuft sein kann.

Als Klebstoff kommt beispielsweise eine Klebdichtungsmasse auf Polyurethanbasis in Betracht.

## Patentansprüche

1. Fahrzeugfenster, insbesondere Seitenfenster von Reisezugwagen, dessen Fensterscheibe (1) in Form einer Doppel- oder Mehrfachscheibe in einem profilierten Fensterrahmen über Klebstoffschichten (3, 4) feststehend angeordnet ist, dadurch gekennzeichnet, daß die Fensterscheibe (1) zumindest eine gegenüber ihrer Innenscheibe (1.1) wenigstens den beiden längeren Fensterseiten nach größere oder kleinere Außenscheibe (1.2) und der Fensterrahmen (2) ein im Querschnitt stufenförmiges Profil mit entsprechend zueinander räumlich versetzten Anschlag- und Klebeflächen (2.1, 2.2) für die Innen- bzw. Außenflächen (1.3, 1.4 bzw. 1.5, 1.6) der Innen- und Außenscheibe (1.1, 1.2) bzw. der mehreren Teilscheiben einer Mehrfachscheibe aufweist.

2. Fahrzeugfenster nach Anspruch 1, dadurch gekennzeichnet, daß der Fensterrahmen aus von der Fahrzeugwandung (7) lösbaren Profilen (2.4) besteht.

3. Fahrzeugfenster nach Anspruch 2, gekennzeichnet durch Rahmenprofile (2.4 Fig. 4, 6) aufgrund einer bloßen Teilung des Wandungsprofils (7).

4. Fahrzeugfenster nach Anspruch 2, dadurch gekennzeichnet, daß die Rahmenprofile (2.4 Fig. 5, 7) wandungsseitig gerahmt sind.

5. Fahrzeugfenster nach Anspruch 2 bis 4, dadurch gekennzeichnet, daß die Rahmenprofile (2.4) an der zugeordneten Wandungs-Anschlagfläche (7.1, 7.2) über eine Verzahnung (8) gegen Querverschiebung gesichert sind.

6. Fahrzeugfenster nach Anspruch 1, dadurch gekennzeichnet, daß je Fensterseite in einem zwischen Klebstoffschichten (3, 4) der Anschlagflächen (2.1, 2.2) freigelassenen Hohlraum sich je ein zum Aufreißen dieser Klebstoffschichten benutzbarer Draht (6) erstreckt.

## Claims

1. A vehicle window, more especially a side window of passenger carriages, the window pane (1) of which is arranged fixedly in the form of a double or multiple pane in a profiled window frame by way of adhesive layers (3, 4), characterised in that the window pane (1) has at least one outer pane (1.2) which is larger or smaller relative its inner pane (1.1) at least according to the two longer window sides and the window frame (2) has a profile which is step-shaped in cross-section and which has corresponding stop and adhesion surfaces (2.1, 2.2) spatially offset to one another for the inner or respectively outer surfaces (1.3, 1.4 or respectively 1.5, 1.6) of the inner and outer pane (1.1, 1.2) or respectively of the several partial panes of a multiple pane.

2. A vehicle window according to claim 1, characterised in that the window frame consists of profiles (2.4) which are detachable from the vehicle wall (7).

3. A vehicle window according to claim 2, characterised by frame profiles (2.4 Fig. 4, 6) by virtue of a mere division of the wall profile (7).

4. A vehicle window according to claim 2, characterised in that the frame profiles (2.4 Fig. 5, 7) are framed on the wall side.

5. A vehicle window according to claim 2 to 4, characterised in that the frame profiles (2.4) are secured at the associated wall stop surface (7.1, 7.2) by way of a toothing (8) against transverse displacement.

6. A vehicle window according to claim 1, characterised in that per window side there extends a respective wire (6) in a cavity left free between adhesive layers (3, 4) of the stop surfaces (2.1, 2.2) which can be used for tearing open these adhesive layers.

**Revendications**

1. Fenêtre de véhicules, en particulier fenêtre latérale de voitures à voyageurs, dont la vitre (1), en forme de vitrage double ou multiple, est encastrée dans un châssis de fenêtre profilé au moyen de couches d'adhésifs (3, 4) caractérisée par le fait que la vitre (1), en ce qui concerne au moins les deux grands côtés, comporte une vitre extérieure (1.2) plus grande ou plus petite que la vitre intérieure (1.1) et que le châssis de fenêtre (2) présente un profil de section transversale étagé comportant, en conséquence, des surfaces de butée et de collage (2.1, 2.2) spatialement décalées l'une par rapport à l'autre pour les surfaces internes ou externes (1.3, 1.4 et 1.5, 1.6) des vitres intérieure et extérieure (1.1, 1.2) ou des vitres d'un vitrage multiple.

2. Fenêtre de véhicules selon la revendication 1, caractérisée par le fait que le châssis de fenêtre est constitué par des profilés (2.4) démontables de la paroi (7) du véhicule.

3. Fenêtre de véhicules selon la revendication 2, caractérisée par de profilés (2.4 figures 4, 6) basés sur le principe d'une simple division du profilé (7) de la paroi.

4. Fenêtre de véhicules selon la revendication 2, caractérisée par le fait que les profilés (2.4 figures 5, 7) du cadre sont encastrés du côté de la paroi.

5. Fenêtre de véhicules selon les revendications 2 à 4, caractérisée par le fait que les profilés (2.4) du châssis appliqués sur les surfaces de butée y associées (7.1, 7.2) de la paroi, sont assurés contre tout déplacement transversal au moyen d'une denture (8).

6. Fenêtre de véhicules selon la revendication 1, caractérisée par le fait que de chaque côté de la fenêtre, un fil métallique (6), utilisé pour la déchirure des couches d'adhésifs, s'étend dans une cavité laissée libre entre les couches d'adhésifs (3, 4) des surfaces de butées (2.1, 2.2).

FIG. 1

FIG. 2

FIG. 3

EP 0 102 526 B1

FIG. 4

1

2.4
7.1
8

7

FIG. 5

1

2.4
7.2
8

7

FIG. 6

1

2.4
8
7.1

7

FIG. 7

1

2.4
7.2
8

7

2